# EUROPEAN PATENT APPLICATION

(11) **EP 4 446 953 A1**
(43) Date of publication of application: **16.10.2024**
(21) Application number: 21967299.5
(22) Date of filing: 10.12.2021
(51) Int. Cl.: G06Q 10/06

(54) **RECOMMENDATION ASSISTANCE DEVICE AND RECOMMENDATION ASSISTANCE METHOD**

(71) Applicant: Hitachi, Ltd., Tokyo 100-8280 (JP)
(72) Inventor: YOSHIOKA Kazuki, Tokyo 100-8280 (JP); FUKUI Kiyosumi, Tokyo 100-8280 (JP); NAKAMURA Yutaro, Tokyo 100-8280 (JP); HIGUCHI Ryutaro, Tokyo 100-8280 (JP)
(74) Representative: MERH-IP Matias Erny Reichl Hoffmann Patentanwälte PartG mbB
(86) International application number: PCT/JP2021/045718
(87) International publication number: WO 2023/105808

(57) **Abstract**

An object of the invention is to determine whether sufficient data can be prepared for a recommendation related to business. The invention provides a recommendation support device 11 for supporting a recommendation related to business, the recommendation support device 11 including: a storage unit configured to store model data of data related to the business; a KPI determination unit 112 configured to determine an amount of data for calculating an auxiliary variable for a KPI of a related person of the business; a model data selection unit 113 configured to determine a granularity of a model data candidate selected from the storage unit; a contribution determination unit 114 configured to determine whether the model data candidate contributes to achieving the KPI; and an application determination unit 115 configured to determine whether the selected model data candidate is applicable to the recommendation related to the business according to a determination result of the granularity, a determination result of the contribution, and a possibility of changing the KPI and the selected model data candidate.

## Description

### Technical Field

The present invention relates to a technique for recommending (proposing) work that constitutes business to a worker. Particularly, the invention relates to a technique for confirming accuracy of a recommendation. The business includes customer service such as equipment maintenance business and transportation business, product production, and the like.

### Background Art

Currently, work for implementing business at various sites is performed by a worker. Here, it is desirable to make a recommendation for work according to a situation related to the work. As the recommendation, in addition to work contents, a maintenance plan such as a work schedule, a worker arrangement is provided. Therefore, in order to make the recommendation according to the situation related to the work, it is desirable to consider business policy and a situation of a related person such as an owner of equipment (customer). For example, by considering a key performance indicator (KPI) of the customer, a more appropriate recommendation can be made. PTL 1 has been proposed as a technique for making a maintenance plan that is a type of a recommendation in consideration of such a KPI.

PTL 1 discloses that "a purpose is to assume various failure rates for equipment and to be able to make an optimal maintenance plan". In order to achieve the object, PTL 1 discloses a maintenance planning device 1 "including: a failure rate model generation unit (failure rate calculation unit 104) that generates a failure rate model based on failure probability information for an O&M asset set by a user; a simulation execution unit 20 that performs a simulation related to a failure that can be generated in the O&M asset under a plurality of different conditions based on the generated failure rate model; a KPI calculation unit 103 that calculates KPIs corresponding to the plurality of different conditions based on a result of the simulation; and an analysis unit 30 that analyzes the plurality of different conditions and the KPIs corresponding to the plurality of different conditions and determines an optimal condition corresponding to the best KPI". In this way, in PTL 1, a maintenance plan that is a type of a recommendation is created according to a KPI.

### Citation List

### Patent Literature

PTL 1: JP2019-133412A

### Summary of Invention

### Technical Problem

As described above, in the related art, in order to accomplish business or execute work, the recommendation in consideration of the KPI is made. Here, in order to make an accurate recommendation so as to correspond to a KPI different for each customer, it is necessary to arrange an amount of data and a granularity of the data to correspond to the KPI without excess or deficiency. However, PTL 1 does not consider excess or deficiency of data, such as whether sufficient data can be prepared for the recommendation, or whether data having an excessive amount of data or an excessively small granularity is excessively obtained to cause a business load of a related person such as a customer or a vendor, although only an amount of data corresponding to each KPI is sufficient for the recommendation.

### Solution to Problem

In order to solve the problems described above, in the invention, whether data can be applied to a recommendation is determined based on the data used for the recommendation and a KPI that is a goal to be achieved.

More specifically, the invention provides a recommendation support device for supporting a recommendation related to business, the recommendation support device including: a storage unit configured to store model data of data related to the business; a KPI determination unit configured to determine an amount of data for calculating an auxiliary variable for a KPI of a related person of the business; a model data selection unit configured to determine a granularity of a model data candidate selected from the storage unit; a contribution determination unit configured to determine whether the model data candidate contributes to achieving the KPI; and an application determination unit configured to determine whether the selected model data candidate is applicable to the recommendation related to the business according to a determination result of the granularity, a determination result of the contribution, and a possibility of changing the KPI and the selected model data candidate.

The invention includes a recommendation support method using a recommendation support device, a program for executing the method on a computer, and a storage medium that stores the program.

### Advantageous Effects of Invention

According to the invention, it is possible to more appropriately determine whether prepared data can be applied to a recommendation.

### Brief Description of Drawings

[FIG. 1] FIG. 1 is a system configuration diagram for executing processing according to an embodiment of the invention.
[FIG. 2] FIG. 2 is a hardware configuration diagram of a recommendation support device including a database according to the embodiment of the invention.
[FIG. 3] FIG. 3 is a flowchart showing contents of processing in the recommendation support device according to the embodiment of the invention.
[FIG. 4] FIG. 4 is a flowchart showing details of step S1 according to the embodiment of the invention.
[FIG. 5] FIG. 5 is a flowchart showing details of step S2 according to the embodiment of the invention.
[FIG. 6] FIG. 6 is a flowchart showing details of step S3 according to the embodiment of the invention.
[FIG. 7] FIG. 7 is a diagram showing maintenance data used in the embodiment of the invention.
[FIG. 8] FIG. 8 is a diagram illustrating a granularity change in model data according to the embodiment of the invention.
[FIG. 9] FIG. 9 is a diagram illustrating another example of the granularity change in the model data according to the embodiment of the invention.

### Description of Embodiments

Hereinafter, an embodiment of the invention will be described with reference to the drawings. In the present embodiment, maintenance business is used as business. That is, in the present embodiment, a recommendation related to the maintenance business (also referred to as RR) is performed. Further, in the present maintenance business, it is assumed that a maintenance target is equipment such as infrastructure, and a customer who is an owner of the equipment exists. Therefore, a KPI in the present embodiment is an index for achieving a goal to be achieved by the customer. The maintenance business is executed by a maintenance operator other than the customer. In the present embodiment, the customer is exemplified as an example of a related person of business, but other business related persons are also included.

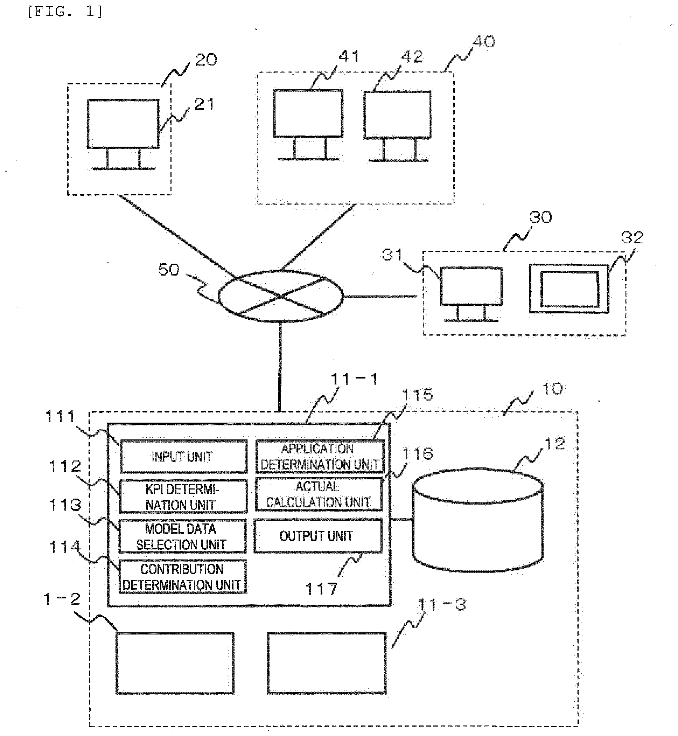

First, FIG. 1 is a system configuration diagram for executing processing according to the present embodiment. In FIG. 1, locations of a data center 10, a maintenance operator 20, a maintenance site 30, and a customer 40 exist, and devices existing at the locations are connected to one another via a network 50. Hereinafter, the devices at the locations will be described.

First, the data center 10 is provided with a recommendation support device 11 and a database 12 that execute main processing of the present embodiment. Further, the recommendation support device 11 includes an input unit 111, a KPI determination unit 112, a model data selection unit 113, a contribution determination unit 114, an application determination unit 115, and an output unit 117. The recommendation support device 11 supports a recommendation in the present embodiment, that is, determines and diagnoses whether a recommendation is possible based on data. The recommendation support device 11 can be implemented by a so-called computer. Further, in the present embodiment, a plurality of recommendation support devices 11-1 to 11-3 are provided. Each of the recommendation support devices 11-1 to 11-3 executes determination and diagnosis, and outputs a result thereof. Furthermore, in each of the recommendation support devices 11-1 to 11-3, the determination and diagnosis is executed by changing a condition such as data, but the determination and diagnosis may be executed by one recommendation support device 11, and the determination and diagnosis may be executed using one condition. Configurations of the recommendation support devices 11-2 and 11-3 are omitted in FIG. 1, but the recommendation support devices 11-2 and 11-3 have configurations similar to that of the recommendation support device 11-1.

Here, the input unit 111 is connected to the network 50, and receives data from other devices. The input unit 111 also includes an input device such as a keyboard.

The KPI determination unit 112, the model data selection unit 113, and the contribution determination unit 114 specify a determination index for determining whether a recommendation can be applied by the application determination unit 115. More specifically, the KPI determination unit 112 determines an amount of data for calculating an auxiliary variable 124 for the KPI. Further, the model data selection unit 113 determines granularity of model data selected from the database 12. Further, the contribution determination unit 114 determines whether the selected model data contributes to achieving the KPI.

The application determination unit 115 determines whether the selected model data can be applied to a recommendation by using the determination index.

When it is determined that the application is possible, an actual calculation unit 116 executes calculation for the recommendation. The actual calculation unit 116 may be omitted or provided in another device. That is, the recommendation support device 11 may not make a recommendation.

Further, the output unit 117 is connected to the network 50, and outputs data and the like to other devices. The output unit 117 includes a display device such as a monitor. Details of a function of the recommendation support device 11 will be described later.

The maintenance operator 20 is provided with an instructor device 21 operated by a work instructor. The instructor device 21 can be implemented by a computer, and outputs a recommendation result from the recommendation support device 11. Further, the instructor device 21 notifies a worker terminal 31 and a worker tablet 32 of a maintenance plan 125 and a maintenance instruction 126 based on the recommendation. Only one instructor device 21 is described in FIG. 1, but a plurality of instructor devices 21 may be provided. It is desirable that the maintenance plan 125 and the maintenance instruction 126 be stored in the database 12 or the like.

The database 12 stores various pieces of data used for the recommendation. The data will be described later, but a KPI of the customer 40 is included therein. The database 12 can be implemented by a file server, but may be implemented as a storage unit provided inside the recommendation support device 11.

At the maintenance site 30, the worker terminal 31 and the worker tablet 32 used by site workers are used. The worker terminal 31 and the worker tablet 32 receive the maintenance instruction 126 and the maintenance plan 125 described above, and output the maintenance instruction 126 and the maintenance plan 125 to the display device or the like. The reception and the output are also implemented by a notebook PC or a smartphone.

The customer 40 is provided with customer devices 41 and 42 used by persons in charge of the customer. The customer devices 41 and 42 store KPIs input from the persons in charge or KPIs specified based on the input. The KPI information is notified from the customer devices 41 and 42 to the database 12. It is preferable to use a management index or a management goal of the customer 40 as the KPI.

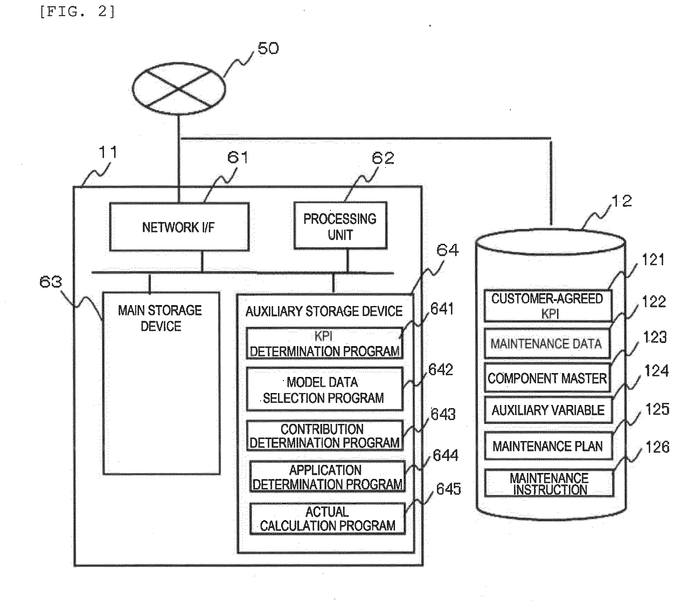

The description above of FIG. 1 is ended. A hardware configuration of the recommendation support device 11 that executes main processing of the present embodiment will be described using FIG. 2. In FIG. 2, the database 12 is also described, and contents thereof will also be described below.

The recommendation support device 11 includes a network I/F 61 (network interface), a processing unit 62, a main storage device 63, and an auxiliary storage device 64, which are connected to one another by a communication path such as a bus. Here, the network I/F 61 is connected to the network 50, and corresponds to the input unit 111 and the output unit 117 in FIG. 1.

Next, the processing unit 62 is implemented by a processor such as a CPU, and executes processing according to a program to be described later. Further, the main storage device 63 is implemented by a random access memory (RAM) or the like, and a program is loaded according to processing of the processing unit 62. Further, the auxiliary storage device 64 is implemented by a storage such as a read only memory (ROM), a hard disk drive (HDD), or a solid state drive (SSD).

The auxiliary storage device 64 stores a KPI determination program 641, a model data selection program 642, a contribution determination program 643, an application determination program 644, and an actual calculation program 645. The programs may be distributed to the recommendation support device 11 via the network 50 or another storage medium. In this way, each program is stored in the storage medium.

Here, the programs and the units shown in FIG. 1 have the following correspondence relationship. The programs and the units have configurations for achieving similar functions.
KPI determination unit 112: KPI determination program 641
model data selection unit 113: model data selection program 642
contribution determination unit 114: contribution determination program 643
application determination unit 115: application determination program 644
actual calculation unit 116: actual calculation program 645

Further, the auxiliary storage device 64 may store various pieces of data stored in the database 12.

Next, the database 12 in FIG. 2 stores a customer-agreed KPI 121, maintenance data 122, the auxiliary variable 124, the maintenance plan 125, and the maintenance instruction 126. However, each piece of data may not be stored in the database 12, but may be stored in another device. The data will be described appropriately during description of processing described below.

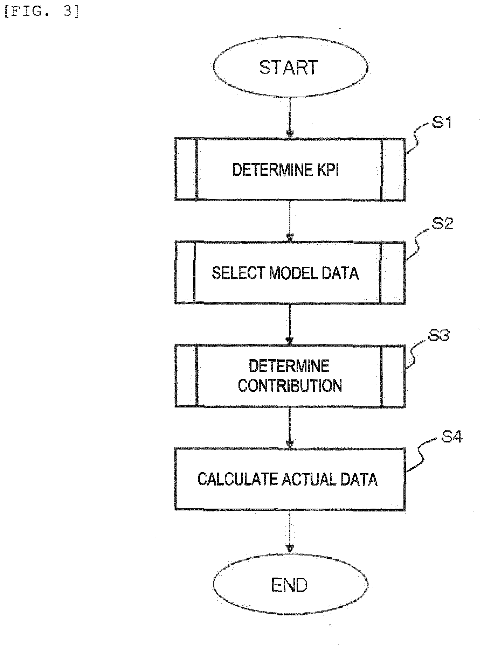

Next, the processing according to the present embodiment will be described. FIG. 3 is a flowchart showing contents of processing in the recommendation support device 11 according to the present embodiment. A main body of the present flowchart is described using the units shown in FIG. 1, but can be executed according to the programs in FIG. 2. The following processing may be configured to be performed in parallel in the recommendation support devices 11-1 to 11-3. In this case, it is desirable to change data received in steps S11 and S21 to be described later.

First, in step S1, the KPI determination unit 112 determines an amount of data for calculating the auxiliary variable 124 for the KPI.

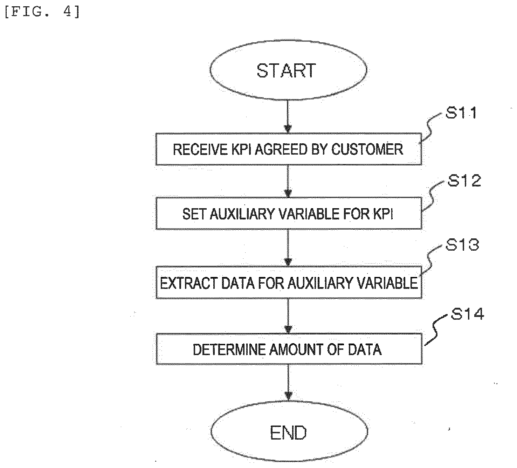

Details of the processing are shown in FIG. 4. In step S11, the KPI determination unit 112 receives a KPI agreed by the maintenance operator and the customer via the input unit 111. Here, the input unit 111 receives the customer-agreed KPI 121 agreed by the instructor device 21 or the customer devices 41 and 42. The customer-agreed KPI 121 according to the present embodiment indicates a management index that the customer wants to improve in his/her own business. The KPI does not necessarily require agreement, and may be a KPI specified by the customer in any form. Further, regarding the customer-agreed KPI 121, it is desirable that the customer and the maintenance operator confirm by the RR what value improves the management index, and the value is set as the customer-agreed KPI 121. For example, a one time fix rate (a rate at which work is completed in one repair dispatch) is also used as the customer-agreed KPI. It is desirable that the customer-agreed KPI 121 be stored in the database 12.

Next, in step S12, the KPI determination unit 112 receives setting of the auxiliary variable 124 for the customer-agreed KPI 121 from the instructor device 21 or the customer devices 41 and 42. Here, an item of the auxiliary variable 124 is received. It is desirable that the auxiliary variable 124 be stored in the database 12 or the like.

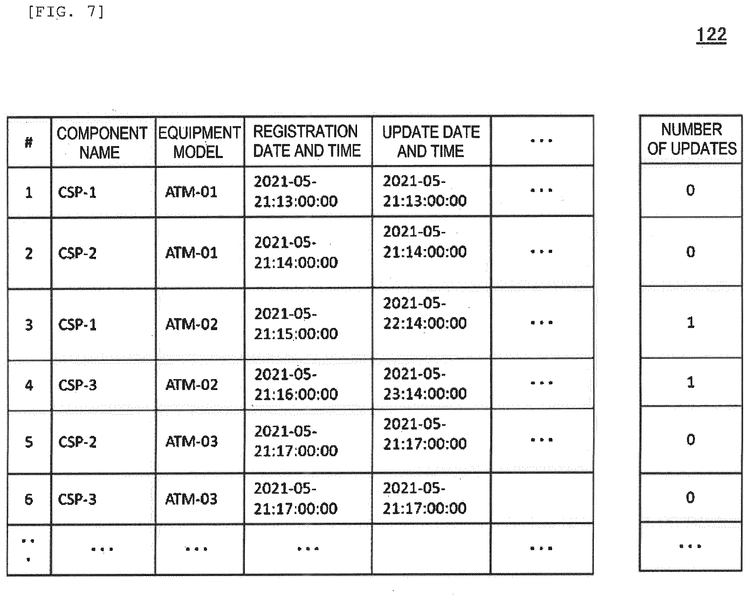

Next, in step S13, the KPI determination unit 112 extracts data corresponding to the received item (auxiliary variable 124). For this purpose, the KPI determination unit 112 extracts the data corresponding to the item described above from the maintenance data 122 that is data used for the RR. Further, in the present step, when it is difficult to directly determine the customer-agreed KPI 121 (one time fix rate) from the maintenance data 122 that is data used for the RR, it is desirable that the KPI determination unit 112 use a variable that influences the customer-agreed KPI 121. Here, the maintenance data 122 used to specify the auxiliary variable 124 is shown in FIG. 7. The maintenance data 122 is data indicating a result of maintenance, and includes a number (#), a component name, an equipment model, registration date and time, update date and time, and the number of updates. Here, the number (#) is information for identifying a record created for each maintenance business. The component name is information for identifying a component used in the corresponding maintenance business. The registration date and time indicates date and time when the corresponding maintenance business is performed and the corresponding record is registered. Further, the update date and time indicates date and time when the corresponding record is updated. Further, the number of updates indicates the number of times the corresponding record is updated. These items are merely examples. Some items may be omitted, and other items may be added. In the present step, the "number of updates" related to the one time fix rate is extracted.

In step S14, the KPI determination unit 112 determines an amount of data of the customer-agreed KPI 121 or the auxiliary variable 124. For this purpose, the KPI determination unit 112 compares the amounts of data with a predetermined threshold, and determines whether a predetermined condition (whether the amounts of data are equal to or larger than the threshold, or the like) is satisfied. For example, the KPI determination unit 112 determines whether a ratio of records including the "number of updates" is equal to or larger than the threshold. As a result, in a case of being less than the threshold, it is determined whether changing the granularity in step S2 to be described later contributes to improving the KPI. In a case of being equal to or larger than the threshold, it is basically determined that the RR is possible.

Thus, the details of step S1 are ended, and the description returns to FIG. 3. In step S2, the model data selection unit 113 selects model data for determining whether application is possible from the maintenance data 122.

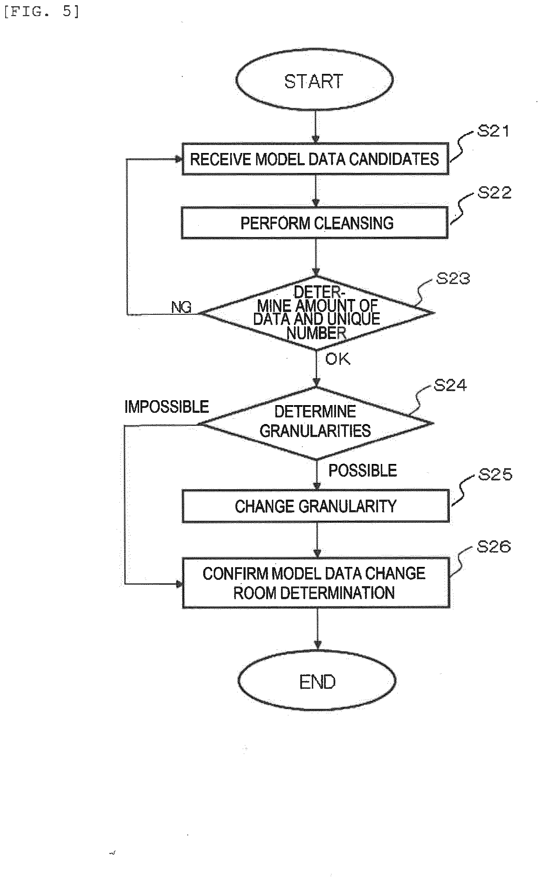

Details of the processing are shown in FIG. 5. In step S21, the model data selection unit 113 receives model data candidates from the instructor device 21 or the customer devices 41 and 42 via the input unit 111. For this purpose, for example, the items of the maintenance data 122 are displayed on the instructor device 21, and the information is confirmed by an instructor. As a result, the instructor device 21 receives the items considered to be usable for the RR from the instructor as the model data candidates. For example, the component name, the equipment model, an occurrence alarm, and an occurrence phenomenon (not shown) are assumed. The displays and the inputs may be performed using the input unit 111 and the output unit 117 of the recommendation support device 11.

Next, in step S22, the model data selection unit 113 performs cleansing on the model data candidates. The cleansing includes unification of orthographic variations, normalization of data, and encoding of the data. The unification of the orthographic variations includes unifying a two-byte size and a one-byte size and modifying abbreviations. Further, the normalization of the data includes loading each of a plurality of pieces of data included in one column into one column. Furthermore, the encoding of the data includes modifying a character string such as a name into a management code (a number or the like) . When the maintenance data 122 is data unified in advance, the present step can be omitted.

Next, in step S23, the model data selection unit 113 determines an amount of data and a unique number of the cleansed model data candidates. In the present step, it is determined whether application to the RR is possible by performing a comparison with thresholds of a predetermined amount of data and the unique number. Hereinafter, an example of the determination will be described. In the present step, first, the model data selection unit 113 determines that the number of records of the maintenance data 122 is a predetermined number (at least several thousand records level, or the like). Further, the model data selection unit 113 confirms that items of the model data candidates (usage parameters) are input at a predetermined ratio or more. Further, when the items of the model data candidates are input at the predetermined ratio or more, the model data selection unit 113 specifies the thresholds described above based on the determined number of the records of the maintenance data 122. The specification can be implemented by performing calculation using a predetermined calculation equation using the number of records as a parameter. The model data selection unit 113 determines whether the application to the RR is possible based on whether the amount of data and the unique number of the model data candidates are equal to or smaller than the thresholds.

As a result of the determination described above, when the application is not possible (NG), the processing returns to step S21, and the model data candidates are received. In this case, it is desirable to increase the number of model data candidates to be selected or change contents thereof. Further, in the present embodiment, when the application is possible (OK), the processing proceeds to step S24.

As an alternative to step S23 shown in FIG. 5, the following processing may be performed. Even when the application is not possible (NG), the processing may shift to step S24, and when it is determined in step S24 that the application is possible (OK), the processing may be continued, and the model data candidates received in step S21 may be selected as the model data.

Next, in step S24, the model data selection unit 113 determines granularities of the model data candidates. Here, the granularity is an index indicating fineness of data. For example, in a case of the component name and a component category, the component name has a finer granularity. Therefore, the granularity indicates whether data is conceptually higher or lower.

Here, an example of determination of the granularity in the present embodiment will be schematically described using the drawings. In the present embodiment, the model data selection unit 113 determines the following (1) and (2). Regarding (1), a granularity change in step S25 to be described later will also be described.

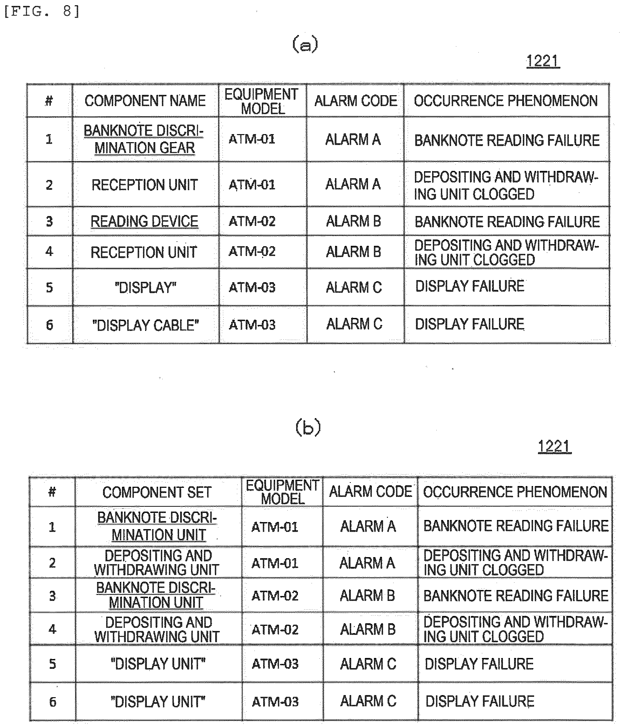

(1) The model data selection unit 113 determines whether there is an item having room for changing a granularity in a model data candidate (usage parameter). For example, the model data selection unit 113 determines whether the component name can be changed to the component category, or whether it can be changed in an opposite direction (subdivision). That is, the model data selection unit 113 determines whether a change from (a) in FIG. 8 to (b) in FIG. 8 is possible. FIG. 8 shows a model data candidate 1221 based on the maintenance data 122. Therefore, the model data candidate 1221 includes items (usage parameters) similar to those of the maintenance data 122. In the present example, a change between (a) "component name" and (b) "component set" is possible. As a result, in step S25, regarding #1 and #3, the granularity is changed from (a) a "banknote discrimination gear" and a "reading device" to (b) "banknote discrimination units" and a component set. Other component names are also similarly changed. In the drawing, underlines and square brackets are shown for convenience in order to correlate items before a change and items after the change.

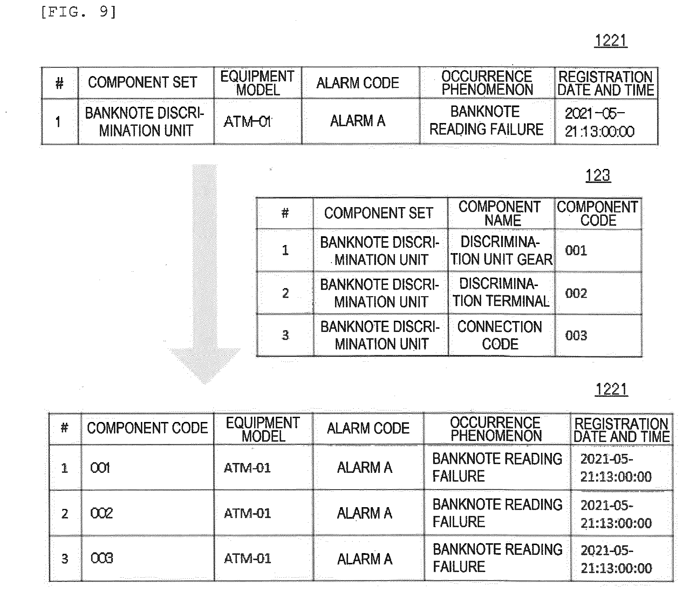

Another example of (1) is shown in FIG. 9. For this purpose, the model data selection unit 113 uses a component master 123. It is desirable that the component master 123 be stored in the database 12, but may be configured to be stored in the customer devices 41 and 42. The model data selection unit 113 specifies a "component code" corresponding to the component set (banknote discrimination unit) of the model data candidate 1221 from the component master 123. In the present example, component codes "001", "002", and "003" are specified. As described above, in order to change the component set to the component code, the number of items (usage parameters) is increased. Therefore, the model data selection unit 113 increases the number of records by an increase in items of the component code of the model data candidate 1221. As a result, in step S25, as shown in a lower portion of the drawing, the granularity of the model data candidate 1221 is changed.

(2) The model data selection unit 113 determines whether the KPI is changed by the granularity change in the usage parameters (items). For this purpose, (Equation 1) shown below is used. Introduction value (effect) = maintenance labor cost (yen/hour) x the number of non-one time fix (number/year) x additional operation time (hour/number) x improvement rate (%) of one time fix

Here, the maintenance labor cost indicates a labor cost of corresponding maintenance. Further, the number of non-one time fix indicates the number of pieces of data not corresponding to the customer-agreed KPI 121. Further, the additional operation time indicates an increase in an operation time of an additional maintenance target machine due to maintenance. Furthermore, the improvement rate of the customer-agreed KPI 121 by the one time fix is shown.

The model data selection unit 113 executes the processing before and after changing the granularity as described above. As a result, it is determined whether the customer-agreed KPI 121 (one time fix rate) is improved (reduced). At this time, it is desirable to determine whether improvement is made based on whether the improvement is equal to or larger than a predetermined numerical value.

As a result of the determination described above, when the change is possible and the KPI is changed (possible), the processing proceeds to step S25. Further, when the change is impossible or the KPI cannot be changed (impossible), the processing shifts to step S26.

Next, in step S25, the model data selection unit 113 changes the granularities of the model data candidates. Contents thereof are described above. When the granularity is changed as described above, an appropriate amount of data can be prepared for a recommendation.

In step S26, the model data selection unit 113 performs model data change room confirmation processing on the model data candidates. For example, at least one of the following is included.
(1) It is confirmed whether the model data candidates exclude anything that contributes to the RR.
(2) It is confirmed whether RR accuracy is improved by deleting the usage parameters of the model data candidates.
(3) It is confirmed whether there is no further room for the granularity change.
(4) It is confirmed whether accuracy of the cleansing is improved.

The improvement in the accuracy of the cleansing in (4) includes dictionary conversion. Further, in (3), processing similar to that of step S25 is executed.

In the present step, the model data selection unit 113 performs processing according to a confirmation result. That is, the following processing is executed.
(1) What is excluded is added (the processing returns to step S21, and the following processing is executed).
(2) The deleted usage parameters are added (the processing returns to step S21, and the following processing is executed).
(3) The granularity change is performed (the processing returns to step S25, and the following processing is executed).
(4) The accuracy is improved, and the cleansing is executed (the processing returns to step S22, and the following processing is executed).

Accordingly, the model data is selected. Thus, the details of step S2 are ended, and the description returns to FIG. 3. In step S3, the contribution determination unit 114 determines whether the selected model data contributes to achieving the KPI.

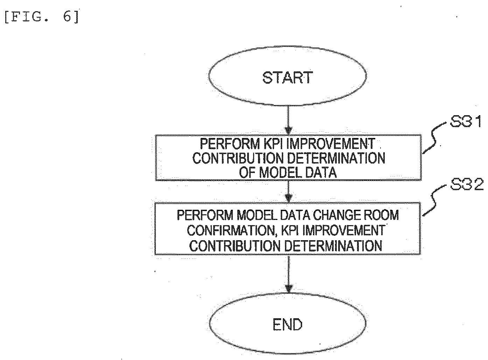

Here, details of step S3 will be described using FIG. 6. First, in step S31, the contribution determination unit 114 performs KPI improvement contribution determination of the model data selected in step S2. For this purpose, the contribution determination unit 114 may execute the following (1) and (2).
(1) The contribution determination unit 114 specifies a variable to which the model data is input, a target variable, and the auxiliary variable 124. Here, as variables to be input, the component, the equipment model, an alarm, the occurrence phenomenon, and the like that are the items of the model data are provided. Further, the target variable includes repair contents. Further, the auxiliary variable 124 includes the number of record updates.
(2) The contribution determination unit 114 determines whether the specified target variable and the specified auxiliary variable 124 have the following relationships.
   · When target information is category information, does the auxiliary variable 124 significantly improve in a specific category?
   · When the target information is linear information, do the target information and the auxiliary variable 124 have correlation?

When at least one of the relationships in (2) is satisfied, the contribution determination unit 114 determines that contribution is made to the KPI improvement.

Next, when the contribution is not made to the KPI improvement, in step S32, the contribution determination unit 114 performs the model data change room confirmation and the KPI improvement contribution determination. Here, the model data change room confirmation is processing similar to that of step S26. Further, the KPI improvement contribution determination is to determine whether there is room (another KPI) for selecting the KPI in step S1. As a result, when there is room for selection, the processing returns to step S1, and the KPI is determined.

In step S3, model data that contributes to the improvement in the KPI is specified. Thus, the details of step S3 are ended, and the description returns to FIG. 3. Next, in step S4, the actual calculation unit 116 uses the model data that contributes to the improvement in the KPI, performs actual calculation for the RR, and creates recommendation information such as the maintenance instruction 126 and the maintenance plan 125. The actual calculation unit 116 notifies the instructor device 21 and the customer devices 41 and 42 of the created information via the output unit 117.

The recommendation information may be the maintenance instruction 126 or the maintenance plan 125 itself (including a draft), or may be information for creating the maintenance instruction 126 or the maintenance plan 125. Further, a configuration may be adopted in which the instructor device 21 and the customer devices 41 and 42 create and modify the maintenance instruction 126 and the maintenance plan 125 by using the notified recommendation information. In this case, the worker terminal 31 or the worker tablet 32 can be more appropriately notified of the maintenance instruction 126 and the maintenance plan 125. Notified contents include a work instruction and a work plan embodying the maintenance instruction 126 and the maintenance plan 125.

Although the invention made by the present inventors has been specifically described based on the embodiment, the invention is not limited to the embodiment, and it is needless to say that various changes can be made without departing from the gist of the invention. Particularly, an application scope of the invention is not limited to the maintenance business, and can be applied to various businesses.

### Reference Signs List

- 10:: data center
- 11:: recommendation support device
- 111:: input unit
- 112:: KPI determination unit
- 113:: model data selection unit
- 114:: contribution determination unit
- 115:: application determination unit
- 117:: output unit
- 12:: database
- 20:: maintenance operator
- 21:: instructor device
- 30:: maintenance site
- 31:: worker terminal
- 32:: worker tablet
- 40:: customer
- 41, 42:: customer device

## Claims

1. A recommendation support device for supporting a recommendation related to business, the recommendation support device comprising:
a storage unit configured to store model data of data related to the business;
a KPI determination unit configured to determine an amount of data for calculating an auxiliary variable for a KPI of a related person of the business;
a model data selection unit configured to determine a granularity of a model data candidate selected from the storage unit;
a contribution determination unit configured to determine whether the model data candidate contributes to achieving the KPI; and
an application determination unit configured to determine whether the selected model data candidate is applicable to the recommendation related to the business according to a determination result of the granularity, a determination result of the contribution, and a possibility of changing the KPI and the selected model data candidate.

2. The recommendation support device according to claim 1, wherein
the model data selection unit determines the granularity when the selected model data candidate satisfies a predetermined amount of data and a predetermined unique number.

3. The recommendation support device according to claim 2, wherein
the model data selection unit changes the granularity for the selected model data candidate.

4. The recommendation support device according to any one of claims 1 to 3, further comprising:
an actual calculation unit configured to calculate data for the recommendation by using a model data candidate determined to be applicable to the recommendation.

5. A recommendation support method using a recommendation support device that supports a recommendation related to business, the recommendation support method comprising:
storing model data of data related to the business in a storage unit;
determining, by a KPI determination unit, an amount of data for calculating an auxiliary variable for a KPI of a related person of the business;
determining, by a model data selection unit, a granularity of a model data candidate selected from the storage unit;
determining, by a contribution determination unit, whether the model data candidate contributes to achieving the KPI; and
determining, by an application determination unit, whether the selected model data candidate is applicable to the recommendation related to the business according to a determination result of the granularity, a determination result of the contribution, and a possibility of changing the KPI and the selected model data candidate.

6. The recommendation support method according to claim 5, further comprising:
determining, by the model data selection unit, the granularity when the selected model data candidate satisfies a predetermined amount of data and a predetermined unique number.

7. The recommendation support method according to claim 6, further comprising:
changing, by the model data selection unit, the granularity for the selected model data candidate.

8. The recommendation support method according to any one of claims 5 to 7, further comprising:
calculating, by an actual calculation unit, data for the recommendation by using a model data candidate determined to be applicable to the recommendation.
